Europäisches Patentamt

European Patent Office

Office européen des brevets

(19)

(11) Veröffentlichungsnummer: **0 001 205**
**B1**

(12) **EUROPÄISCHE PATENTSCHRIFT**

(45) Veröffentlichungstag der Patentschrift: **23.09.81**

(21) Anmeldenummer: **78100503.8**

(22) Anmeldetag: **26.07.78**

(51) Int. Cl.³: **F 24 D 19/02, F 24 D 3/00**

(54) Fussbodenheizung.

(30) Priorität: **21.09.77 DE 2742402**

(43) Veröffentlichungstag der Anmeldung:
**04.04.79 Patentblatt 79/7**

(45) Bekanntmachung des Hinweises auf die Patenterteilung:
**23.09.81 Patentblatt 81/38**

(84) Benannte Vertragsstaaten:
**BE DE FR LU NL**

(56) Entgegenhaltungen:
**DE - A - 1 615 349**
**DE - U - 7 522 695**
**DE - U - 763 177**
**FR - A - 1 407 228**
**FR - A - 2 076 678**
**FR - A - 2 170 133**
**FR - A - 2 358 621**

(73) Patentinhaber: **HOECHST AKTIENGESELLSCHAFT**
**Postfach 80 03 20**
**D-6230 Frankfurt/Main 80 (DE)**

(72) Erfinder: **Dany, Franz-Josef, Dr.**
**Kölner Ring 167**
**D-5042 Erftstadt (DE)**
Erfinder: **Seydel, Joachim**
**Merricher Strasse 68**
**D-5040 Brühl (DE)**
Erfinder: **Kalteyer, Gerhard**
**Laurentiusstrasse 8**
**D-5042 Erftstadt (DE)**
Erfinder: **Prestin, Peter**
**Grippekovener Strasse 70**
**D-5030 Hürth-Gleuel (DE)**

Courier Press, Leamington Spa, England.

### Fußbodenheizung

Die vorliegende Erfindung betrifft eine mit Warmwasser betreibbare und zur Einbettung in Fließestrich vorgesehene Fußbodenheizung, wobei auf eine mit einer Dämmschicht versehene Rohdecke eine aus Polyolefin bestehende Folie aufgelegt ist, auf der wasserführende, mäander- oder spiralförmig angeordnete Rohre befestigt sind.

Es ist bekannt, Heizrohre einer Fußbodenheizung mäander- oder spiralförmig auf einem Netz aus Stahldraht oder Kunstfasergewebe oder einem Schienensystem zur Fixierung ihrer Anordnung zu befestigen, wobei das Netz bzw. das Schienensystem auf der Rohdecke befestigt ist. Die gesamte Konstruktion wird sodann in einen Estrich eingebaut. Dabei ist es zur Erzielung der geforderten Luft- und Trittschalldämmung häufig nötig, unmittelbar auf die Rohdecke eine Dämmschicht, beispielsweise Platten aus Schaumkunststoffen (vergl. DIN 4109, Blatt 3, Tabelle 1), aufzulegen.

Nach der DE—U—7 631 377 können die Heizrohre in mehrere, im Untergrund verankerte Befestigungsschienen eingeklemmt werden, welche eine Reihe von ausgesparten Kreissegmenten aufweisen und wobei die Kreissegmente durch Stege voneinander getrennt sind.

Nach einem älteren, nicht vorveröffenlichten Vorschlag werden Heizrohre aus Polyolefin mit Schellen an einer Armierungsmatte befestigt, wobei die Armierungsmatte ihrerseits durch Stifte mit dem Untergrund verbunden ist. Die Heizrohre werden dann in einen Fließestrich eingegossen.

Aus der FR—A—2 170 133 ist eine zur Verwendung für elektrische Flächenheizungen vorgesehene Heizmatte bekannt, welche aus einem mäanderförmig verlaufenden Heizkabel und quer dazu angeordneten Verbindungsstegen besteht. Dabei ist jeder Verbindungssteg aus einem unteren und einem oberen Band aufgebaut, wobei das untere Band eine höhere Steifigkeit aufweist als das obere Band, welches ein Trägergewebe enthält. Beide Bänder sind mit Ausnahme des Bereiches, in welchem sich jeweils eine Kabelschlaufe bildet, auf ganzer Fläche miteinander verschweißt.

Nach der FR—A—2 076 678 können in Betonelemente eingelassene Zentralheizungsschlangen insbesondere aus Polyäthylen oder Polypropylen bestehen.

Schließlich sind aus der DE—U—7 522 695 zur Festlegung von Rohren oder Kabeln Schellen bekannt, welche jeweils aus zwei nach oben weisenden Backen und einem Fuß bestehen, welcher in eine Schiene mit C—Profil eingeschoben ist. Damit die Schelle beim Eindrücken eines Rohres zwischen ihre Backen durch Verformung ihres Fußes mit der Schiene klemmend zusammenwirkt, ist es erforderlich, daß die Schelle aus elastischem Material, beispielsweise Kautschuk oder einem elastischen Kunststoff, besteht.

Nachteilig ist bei den bekannten Befestigungen der Heizrohre, daß durch die jeweils erforderliche Verankerung von Schienen oder Matten am Untergrund die aus Polyolefin bestehende Folie durchstoßen wird, wodurch der anschließend aufzutragende Fließestrich zumindest in kleinen Mengen durch die Folie hindurchfließt, wobei kraterartige Vertiefungen in der erstarrten Estrichoberfläche die Folge sind. Darüberhinaus entstehen durch die gegebenenfalls bis in die Rohdecke führenden Dübelbefestigungen zur Fixierung des Netzes oder der Schienen Schallbrücken, welche die Trittschalldämmung verringern. Schließlich besteht bei den bekannten Befestigungen der Heizrohre über Verbindungsstege die Gefahr, daß zur Wasserführung geeignete Rohre mit niedrigem spezifischen Gewicht beim Einbetten in Fließestrich aufschwimmen.

Es ist daher Aufgabe der vorliegenden Erfindung, eine mit Warmwasser betreibbare und zur Einbettung in Fließestrich vorgesehene Fußbodenheizung anzugeben, bei welcher eine Beschädigung der Folie im Zuge der Befestigung der Rohre ausgeschlossen und die dauerhafte Fixierung der Rohre ohne Gefahr ihres Aufschwimmens gewährleistet ist.

Das wird erfindungsgemäß dadurch erreicht, daß die Befestigung der Rohre durch senkrecht dazu angeordnete Laschen aus dem gleichen Material wie die Folie erfolgt, wobei die Laschen mit der Folie über an beiden Seiten des Rohres und parallel zu ihm verlaufende Streifen in der Weise verschweißt sind, daß zwischen dem Rohr und der Folie eine geringfügiges Spiel entsteht.

Die Fußbodenheizung gemäß der Erfindung kann wahlweise auch noch dadurch weitergebildet sein, daß

a) der Fließestrich aus einer freifließenden Masse aus Anhydrit und/oder Calciumsulfat-Halbhydrat gebildet ist;

b) die Rohre aus Polybutylen bestehen;

c) die Rohre aus Polyvinylchlorid bestehen;

d) die Rohre aus Metall, vorzugsweise aus Kupfer oder seinen Legierungen, bestehen;

e) die Laschen aus Polyäthylen bestehen;

f) die Laschen aus Polypropylen bestehen;

g) die Laschen aus Polybutylen bestehen;

h) die Laschen 10 bis 100 mm, vorzugsweise 20 bis 50 mm, breit sind;

i) die Laschen 0,05 bis 1,0 mm, vorzugsweise 0,2 bis 0,4 mm, dick sind.

Bei der erfindungsgemäßen Fußbodenheizung werden Laschen aus Kunststoff verwendet, deren Dicke etwa der Dicke der auf der Dämmschicht ausgelegten Folie entspricht. Die Verschweißung der Laschen mit der Folie erfolgt vorteilhaft nach dem Wärmeimpuls-Schweißverfahren innerhalb von wenigen Sekunden, wobei ein Schweißgerät angewendet wird, dessen elektrische Heizung erst dann einen Stromimpuls erhält, wenn die Schweißschiene mit entsprechendem Druck auf die Lasche aufgesetzt ist.

Bei der Fußbodenheizung gemäß der Erfindung sind die Rohre nicht ganz eng, sondern mit etwas Spiel an der Folie befestigt. Dadurch wird erreicht, daß die Rohre allseitig von Estrichmasse umhüllt werden, weil sie in diesem Fall beim Gießen des Fließestrichs geringfügig aufschwimmen können. Die vollständige Umhüllung der Rohre mit Estrichmasse wirkt sich günstig auf eine gleichmäßige Wärmeabgabe an den Fußboden aus.

Bei der erfindungsgemäßen Fußbodenheizung bleiben die durch das Biegen unter Spannung stehenden Rohre lagestabil, obwohl sie auf einer nur lose verlegten Folie befestigt sind. Das wird dadurch bewirkt, daß die Rohre zusammen mit der Folie durch die Auflast der flüssigen Estrichmasse fest auf die Dämmschicht gedrückt und somit in der gewünschten Lage fixiert werden.

In der beigefügten Zeichnung ist ein Ausführungsbeispiel des Gegenstandes der Erfindung schematisch dargestellt. Dabei zeigen:

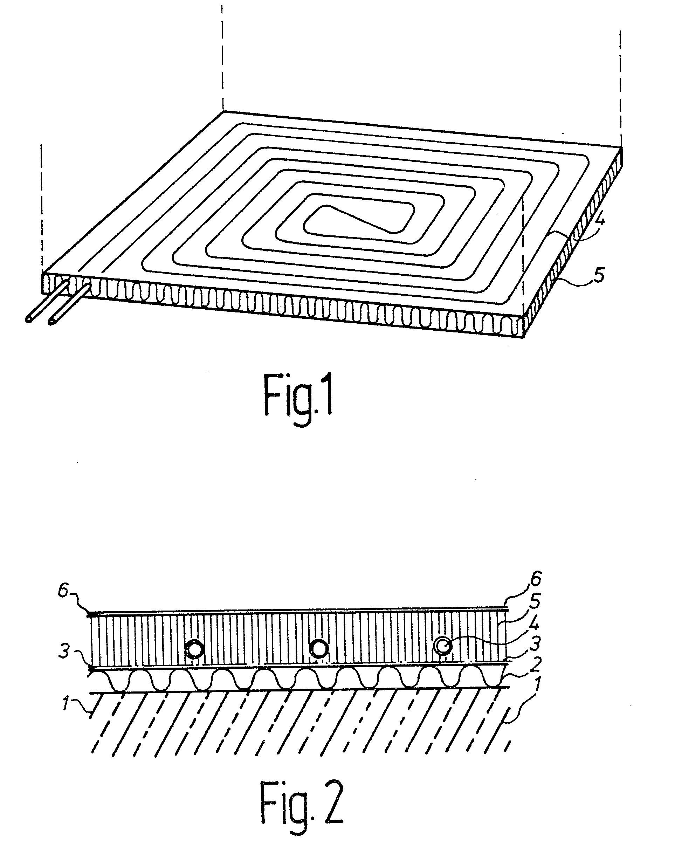

Figuren 1 und 2 den grundsätzlichen Aufbau einer in Fließestrich verlegten Fußbodenheizung in Draufsicht und Schnitt senkrecht zum Fußboden;

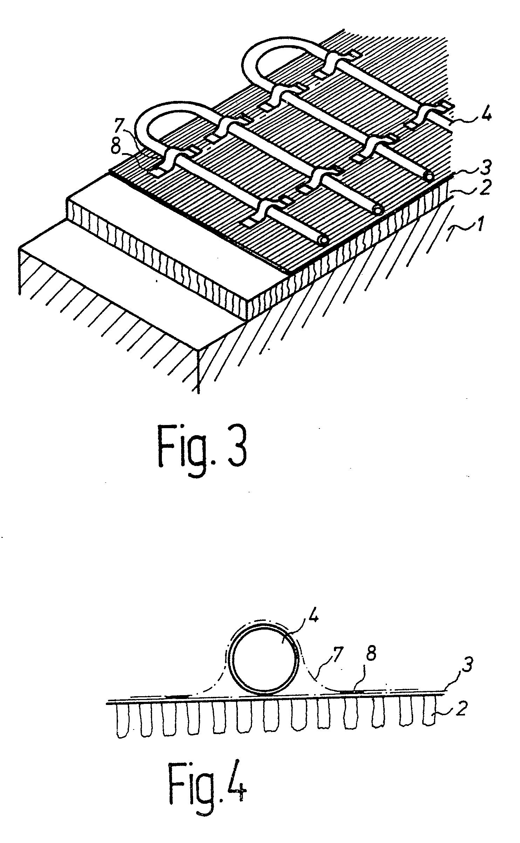

Figur 3 die erfindungsgemäß auf der Folie befestigten Rohre;

Figur 4 einen teilweisen Schnitt durch ein Rohr nach Figur 3 im Bereich einer Lasche.

Auf einer Rohdecke 1, beispielsweise einem Betonboden, ist eine Dämmschicht 2, beispielsweise aus Polystyrol-Hartschaumplatten, verlegt. Auf der Dämmschicht 2 ist eine Folie 3 aus Polyäthylen wannenartig ausgelegt. Auf die Folie 3 sind Rohre 4 aus Polypropylen in vorgegebenen Abständen aufgelegt und durch verschweißte Laschen 7 aus Polyäthylen auf der Folie 3 fixiert, wobei die Verschweißung von Folie 3 und Lasche 7 über beidseitig des Rohres 4 und parallel zu ihm verlaufende Streifen 8 derart erfolgt ist, daß zwischen Rohr 4 und Folie 3 ein geringfügiges Spiel möglich ist. Dabei beträgt der Abstand zwischen zwei Laschen 7 auf einem Rohr 4 etwa 40 cm. Nach Erhärten des auf die Folie 3 ausgegossenen Fließestrichs 5 auf der Basis von Calciumsulfat-$\alpha$-Halbhydrat, von welchem die Rohre 4 vollständig umgeben sind, ist schließlich ein Bodenbelag 6 gelegt.

## Patentansprüche

1. Mit Warmwasser betreibbare und zur Einbettung in Fließestrich (5) vorgesehene Fußbodenheizung, wobei auf eine mit einer Dämmschicht (2) versehene Rohdecke (1) eine aus Polyolefin bestehende Folie (3) aufgelegt ist, auf der wasserführende mäander- oder spiralförmig angeordnete Rohre (4) befestigt sind, dadurch gekennzeichnet, daß die Befestigung der Rohre (4) durch senkrecht dazu angeordnete Laschen (7) aus dem gleichen Material wie die Folie (3) erfolgt, wobei die Laschen (7) mit der Folie (3) über an beiden Seiten des Rohres (4) und parallel zu ihm verlaufende Streifen (8) in der Weise verschweißt sind, daß zwischen dem Rohr (4) und der Folie (3) ein geringfügiges Spiel entsteht.

2. Fußbodenheizung nach Anspruch 1, dadurch gekennzeichnet, daß der Fließestrich (5) aus einer freifließenden Masse aus Calciumsulfat-Halbhydrat gebildet ist.

3. Fußbodenheizung nach Anspruch 1 oder 2, dadurch gekennzeichnet, daß die Rohre (4) aus Polybutylen bestehen.

4. Fußbodenheizung nach Anspruch 1 oder 2, dadurch gekennzeichnet, daß die Rohre (4) aus Polyvinylchlorid bestehen.

5. Fußbodenheizung nach Anspruch 1 oder 2, dadurch gekennzeichnet, daß die Rohre (4) aus Metall, vorzugsweise aus Kupfer oder seinen Legierungen, bestehen.

6. Fußbodenheizung nach einem der Ansprüche 1 bis 5, dadurch gekennzeichnet, daß die Laschen (7) aus Polyäthylen bestehen.

7. Fußbodenheizung nach einem der Ansprüche 1 bis 5, dadurch gekennzeichnet, daß die Laschen (7) aus Polypropylen bestehen.

8. Fußbodenheizung nach einem der Ansprüche 1 bis 5, dadurch gekennzeichnet, daß die Laschen (7) aus Polybutylen bestehen.

9. Fußbodenheizung nach einem der Ansprüche 1 bis 8, dadurch gekennzeichnet, daß die Laschen (7) 10 bis 100 mm, vorzugsweise 20 bis 50 mm, breit sind.

10. Fußbodenheizung nach einem der Ansprüche 1 bis 9, dadurch gekennzeichnet, daß die Laschen (7) 0,05 bis 1,0 mm, vorzugsweise 0,2 bis 0,4 mm, dick sind.

## Revendications

1. Chauffage de sol fonctionnant à l'eau chaude et prévu pour l'incorporation dans une chape coulée (5), une feuille (3) consistant en polyoléfine, sur laquelle sont fixés des tubes (4) de conduite de l'eau disposés en méandres ou en spirales, étant posée sur un plancher brut (1) muni d'une couche isolante (2), caractérisé en ce que la fixation des tubes (4) s'effectue par le moyen de colliers (7) de même matière que la feuille (3) disposés perpendiculairement à ceux-ci, les colliers (7) étant soudés avec la feuille (3) au moyen de bandes (8) courant sur les deux côtés du tube (4) et parallèlement à celui-ci de telle manière qu'il y ait un léger jeu entre le tube (4) et la feuille (3).

2. Chauffage de sol selon la revendication 1, caractérisé en ce que la chape coulée (5) est constituée d'une masse fluide en sulfate de calcium hémihydraté.

3. Chauffage de sol selon la revendication 1 ou 2, caractérisé en ce que les tubes (4) consistent en polybutylène.

4. Chauffage de sol selon la revendication 1 ou 2, caractérisé en ce que les tubes (4) consistent en chlorure de polyvinyle.

5. Chauffage de sol selon la revendication 1 ou 2, caractérisé en ce que les tubes (4) consistent en métal, de préférence en cuivre ou ses alliages.

6. Chauffage de sol selon l'une des revendications 1 à 5, caractérisé en ce que les colliers (7) consistent en polyéthylène.

7. Chauffage de sol selon l'une des revendications 1 à 5, caractérisé en ce que les colliers (7) consistent en polypropylène.

8. Chauffage de sol selon l'une des revendications 1 à 5, caractérisé en ce que les colliers (7) consistent en polybutylène

9. Chauffage de sol selon l'une des revendications 1 à 8, caractérisé en ce que les colliers (7) ont une largeur de 10 à 100 mm, de préférence de 20 à 50 mm.

10. Chauffage de sol selon l'une des revendications 1 à 9, caractérisé en ce que les colliers (7) ont une épaisseur de 0,05 à 1,0 mm, de préférence de 0,2 à 0,4 mm.

## Claims

1. Underfloor heating operable with warm water and intended for being embedded in a cast floor covering layer (5), an unplastered floor (1) provided with an insulating layer (2) having a polyolefin sheet (3) laid thereon, and a plurality of water-conveying pipes (4) in meander-like or helical arrangement being secured to the sheet (3), characterized in that the tubes (4) are held in position by ledges (7) of the same material as sheet (3) disposed perpendicularly with respect to said tubes, the ledges (7) being welded to the sheet (3) by means of strips (8) arranged so as to run along the two sides of the tube (4) and parallel thereto so as to provide for a certain free space between the tube (4) and the sheet (3).

2. Underfloor heating as claimed in claim 1, wherein the cast floor covering (5) is formed of a free flowing mass of calcium sulfate semihydrate.

3. Underfloor heating as claimed in claim 1 or 2, wherein the tubes (4) consist of polybutylene.

4. Underfloor heating as claimed in claim 1 or 2, wherein the tubes (4) consist of polyvinylchloride.

5. Underfloor heating as claimed in claim 1 or 2, wherein the tubes (4) consist of metal, preferably of copper or its alloys.

6. Underfloor heating as claimed in any of claims 1 to 5, wherein the ledges (7) consist of polyethylene.

7. Underfloor heating as claimed in any of claims 1 to 5, wherein the ledges (7) consist of polypropylene.

8. Underfloor heating as claimed in any of claims 1 to 5, wherein the ledges (7) consist of polybutylene.

9. Underfloor heating as claimed in any of claims 1 to 8, wherein the ledges (7) are 10 to 100 mm, preferably 20 to 50 mm, wide.

10. Underfloor heating as claimed in any of claims 1 to 9, wherein the ledges (7) are 0.05 to 1.0 mm, preferably 0.2 to 0.4 mm, thick.

Fig.1

Fig. 2

1

Fig. 3

Fig. 4

2